Europäisches Patentamt

European Patent Office

Office européen des brevets

(11) Veröffentlichungsnummer: **0 541 626 B1**

(12) # EUROPÄISCHE PATENTSCHRIFT

(45) Veröffentlichungstag der Patentschrift: **21.12.94**

(51) Int. Cl.5: **C07F 9/38**, C07F 9/02

(21) Anmeldenummer: **91913814.9**

(22) Anmeldetag: **27.07.91**

(86) Internationale Anmeldenummer:
**PCT/EP91/01412**

(87) Internationale Veröffentlichungsnummer:
**WO 92/02524 (20.02.92 92/05)**

(54) **VERFAHREN ZUR ABTRENNUNG VON VINYLPHOSPHONSÄURE AUS ROHGEMISCHEN.**

(30) Priorität: **04.08.90 DE 4024828**

(43) Veröffentlichungstag der Anmeldung:
**19.05.93 Patentblatt 93/20**

(45) Bekanntmachung des Hinweises auf die
Patenterteilung:
**21.12.94 Patentblatt 94/51**

(84) Benannte Vertragsstaaten:
**BE CH DE DK ES FR GB IT LI NL**

(56) Entgegenhaltungen:
**DE-A- 3 641 603**
**US-A- 3 896 163**

(73) Patentinhaber: **HOECHST AKTIENGESELL-
SCHAFT**

**D-65926 Frankfurt (DE)**

(72) Erfinder: **ROSCHER, Günter**
**Hölderlinstrasse 64**
**D-6233 Kelkheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Zur Herstellung von reiner Vinylphosphonsäure sind unterschiedliche Methoden bekannt. So kann z.B. Vinylphosphonsäuredichlorid hydrolysiert werden. Die Synthese von reinem Vinylphosphonsäurechlorid ist jedoch technisch aufwendig. Eine Reihe von anderen Verfahren zur Herstellung reiner Vinylphosphonsäure ist deshalb bereits in der Literatur beschrieben.

So erhält man bei der thermischen Spaltung von Acetoxyethanphosphonsäuredialkylestern gemäß der DE-Offenlegungsschrift 3 001 894 unter Abspaltung von Alkylacetaten und Dialkylethern ein Sumpfgemisch, das in der Summe bis zu 85 % aus unterschiedlichen Vinylphosphonsäurederivaten besteht. Bei der Hydrolyse dieses Gemisches, z.B. nach der DE-Offenlegungsschrift 3 110 975, erhält man eine bis zu 82%ige Vinylphosphonsäure. Dieser Reinheitsgrad ist aber für viele Anwendungszwecke der Vinylphosphonsäure nicht ausreichend, da im allgemeinen Reinheitsgrade von etwa 90 - 95 % erwünscht sind, wobei der Phosphorsäuregehalt unter 5 Gew.-% liegen sollte.

Nach der in der DE-Offenlegundsschrift 3 120 437 beschriebenen Methode zur Herstellung von reiner Vinylphosphonsäure wird das gemäß der vorstehend erwähnten DE-Offenlegungsschrift erhaltene Sumpfgemisch der thermischen Spaltung mit Orthocarbonsäureestern unterworfen unter Herstellung von Vinylphosphonsäuredialkylestern, die nach Reindestillation und Hydrolyse dann höher konzentrierte Vinylphosphonsäure ergeben. Als Nebenprodukt der Vinylphosphonsäure-Herstellung nach dieser Methode entsteht stets auch Trialkylphosphat, das destillativ praktisch nicht von dem betreffenden Vinylphosphonsäuredialkylester abgetrennt werden kann. Als Folge davon enthält die durch Hydrolyse der betreffenden Ester gewonnenen Vinylphosphonsäure noch mindestens 7 Gew.-% Phosphorsäure. Die Abtrennung der Phosphorsäure als in Wasser schwerlösliches Magnesiumammoniumhydrogenphosphat ist zwar in der Literatur beschrieben, doch bedeutet dies einen weiteren zusätzlichen Schritt und bedingt in der Vinylphosphonsäure verbleibende Spuren von Magnesiumammoniumsalz, die für manche Anwendungszwecke störend sind. Weiterhin ist die Verwendung von Orthocarbonsäureestern wirtschaftlich aufwendig.

Reine Vinylphosphonsäure läßt sich nach der DE-Offenlegungsschrift 3 707 149 durch Hydrolyse eines Vinylphosphonsäureesters gewinnen, der durch Vakuumspaltung von Acetoxyethanphosphonsäuredialkylestern gewonnen wurde. Auch bei dieser Methode fallen ca. 20 % eines Sumpfmaterials an, das noch unterschiedliche Vinylphosphonsäurederivate enthält, welche durch thermische Nachbehandlung und anschließende Hydrolyse in eine 50 bis 70 %ige Vinylphosphonsäure übergeführt werden können die als Verlust gerechnet werden muß, wenn die im Gemisch enthaltene Vinylphosphonsäure nicht abgetrennt werden kann.

Die deutsche Offenlegungsschrift Nr. 36 41 603 beschreibt ein Verfahren zu Herstellung eines hochreinen Phosphorsäureestersalzes, in dem der Phosphorsäureester in ein Phosphorsäureestersalz umgewandelt wird und nicht-ionische Verunreinigungen aus dem Reaktionsgemisch mit Hilfe von $C_1$-$C_4$-Alkoholen oder aliphatischen $C_4$-$C_8$-Kohlenwasserstoffen extraktiv entfernt werden.

Die vorliegende Erfindung betrifft nun ein Verfahren zur Abtrennung von Vinylphosphonsäure aus Rohgemischen, das dadurch gekennzeichnet ist, daß die Abtrennung durch Extraktion mit Alkoholen und/oder Ketonen, die jeweils mindestens 5 Kohlenstoffatome, vorzugsweise 5 bis 15 Kohlenstoffatome und insbesondere 5 bis 10 Kohlenstoffatome enthalten, erfolgt.

Die erfindungsgemäß als Extraktionsmittel eingesetzten Alkohole sind im allgemeinen ein- oder zweiwertig, vorzugsweise einwertig; ihr Kohlenwasserstoffrest stellt vorzugsweise einen verzweigten oder unverzweigten gesättigten aliphatischen Rest oder einen cycloaliphatischen Rest dar, der gegebenenfalls mit ($C_1$-$C_4$)-Alkylgruppen substituiert sein kann, deren Zahl im allgemeinen 1 bis 3 beträgt. Gegebenenfalls können diese Reste auch Heteroatome, wie Sauerstoffatome enthalten oder gegenüber dem Rohgemisch inerte Gruppen mit Heteroatomen aufweisen. Als Beispiele für derartige Alkohole seien hier genannt: 2-Ethylhexanol, Cyclohexanol, die verschiedenen Heptanole, Nonylalkohol und dergleichen. 2-Ethylhexanol ist dabei als Extraktionsmittel bevorzugt.

Die erfindungsgemäß gleichermaßen als Extraktionsmittel eingesetzten Ketone besitzen entweder zwei Kohlenwasserstoffreste, vorzugsweise verzweigte oder unverzweigte Alkylreste, mit insgesamt der oben angegebenen Zahl an Kohlenstoffatomen oder sie leiten sich von einem cycloaliphatischen, gegebenenfalls mit 1 bis 3 ($C_1$-$C_4$)Alkylgruppen substituiertem Kohlenwasserstoff ab. Als derartige Ketone kommen hier beispielsweise in Frage: Methyl(iso)butylketon, Methyl-tert.-butylketon, Diisopropylketon, Diisobutylketon, 5-Methyl-3-heptanon, 4-Heptylketon, Cyclopentanon, Cyclohexanon, 3,3,5-Trimethylcyclohexanon.

Das erfindungsgemäß eingesetzte, vorzugsweise wäßrige Rohgemisch, das auf beliebigem Wege hergestellt sein kann, enthält in der Regel mindestens 20 Gew.-%, vorzugsweise mindestens 30 Gew.-% und insbesondere mindestens 40 Gew.-%, jeweils bezogen auf die Gesamtmischung, an Vinylphosphonsäure. In Sonderfällen kann deren Anteil jedoch auch unterhalb von 20 Gew.-% liegen.

EP 0 541 626 B1

Als weitere Bestandteile (Verunreinigungen) kommen neben Wasser vor allem Phosphorsäure, Polyphosphorsäuren und/oder andere Phosphonsäurederivate, wie z.B. Hydroxyethanphosphonsäure, Ether der Hydroxyethanphosphonsäure, Veresterungsprodukte von Vinylphosphonsäure mit Hydroxyethanphosphonsäure sowie Gemischether und -ester der angeführen Einzelverbindungen in Frage. Die Wasserkonzentration der eingesetzten Vinylphosphonsäuregemische kann dabei unterschiedlich sein, je nach Menge und Art der in der rohen Vinylphosphonsäure enthaltenen Verunreinigungen.

Das erfindungsgemäße Verfahren wird zweckmäßigerweise bei Raumtemperatur oder bei mäßig erhöhter Temperatur von etwa 20 bis etwa 90°C, vorzugsweise bis etwa 50°C, wobei aber grundsätzlich auch noch höhere Temperaturen möglich sind, und im allgemeinen bei Normaldruck durchgeführt. In Sonderfällen kann auch bei erhöhtem oder erniedrigtem Druck gearbeitet werden.

Als Apparate für die Extraktion sind die üblichen technischen Apparate wie Mixer-Settler-Apparaturen oder die üblichen Extraktionskolonnen mit Schwingböden, rotierenden oder fest eingebauten Böden oder auch einfach pulsierende Füllkörpersäulen geeignet, in denen das Rohgemisch und das Extraktionsmittel im Gegenstrom geführt werden und in denen die Trennung als fraktionierte Extraktion erfolgt. Das Verhältnis Zulaufmenge des Rohgemisches zur Zulaufmenge des Extraktionsmittels beträgt im allgemeinen 1:1 bis 1:20, vorzugsweise 1:2 bis 1:10. Auch andere Mengenverhältnisse sind möglich; diese können vom Fachmann leicht ermittelt werden und sind abhängig vom gewünschten Extraktionsgrad, vom verwendeten Extraktionsmittel und von der Zusammensetzung des Rohgemisches.

Bei der erfindungsgemäßen Extraktion gelangen neben der Vinylphosphonsäure im allgemeinen nur geringe Mengen an Verunreinigungen - zumeist Phosphorsäure - mit in das Extraktionsmittel Diese können durch Waschen mit wenig Wasser wieder entfernt werden, wobei das Waschwasser zur Rohsäure zurückgeführt werden kann.

In der Regel reicht eine einmalige Durchführung der Extraktion in der Trennkolonne aus, um eine Vinylphosphonsäure der gewünschten Reinheit zu erhalten.

Im Bedarfsfalle - wenn eine hochreine, z.B. 99%ige Vinylphosphonsäure gewünscht wird - kann aber diese Extraktionstrennung, nach vorheriger Isolierung der Vinylphosphonsäure und Auflösung in Wasser, wiederholt werden.

Die Aufarbeitung der erfindungsgemäß erhaltenen Vinylphosphonsäurelösungen ist auf verschiedenen Wegen möglich. So kann z.B. das Extraktionsmittel von der gelösten Vinylphosphonsäure abdestilliert werden, wobei die Vinylphosphonsäure dann als Rückstand verbleibt. Die Vinylphosphonsäure kann aber auch mit Wasser aus dem organischen Medium rückextrahiert werden. Das so gewonnene organische Medium kann dann zur Extraktion der Vinylphosphonsäure aus dem Rohgemisch direkt im Kreislauf zurückgeführt werden. Die wäßrige Lösung wird eingedampft, der Rückstand ist Vinylphosphonsäure mit der gewünschten Reinheit.

Da die erfindungsgemäß anfallende Extraktionslösung praktisch ausschließlich Vinylphosphonsäure enthält, kann für eine Reihe von weiteren Umsetzungen der Vinylphosphonsäure, z.B. für die Polymerisation zur Herstellung von Polyvinylphosphonsäure oder für die Mischpolymerisation, diese Extraktionslösung direkt, d.h. ohne Zwischenisolierung der Vinylphosphonsäure, weiter verarbeitet werden.

Es war zu erwarten gewesen, daß die anderen in der Mischung enthaltenen Phosphonsäurederivate ein ähnliches Lösungsverhalten zeigen wie die Vinylphosphonsäure und deshalb über die beschriebene Extraktion nicht abtrennbar sind. Es war deshalb nicht vorhersehbar und ist als überraschend anzusehen, daß mit dem erfindungsgemäßen Verfahren unter Einsatz spezieller Extraktionsmittel Vinylphosphonsäure in hoher Reinheit von zumeist mehr als 85 %, vorzugsweise 90 bis 95 %, und Ausbeuten von zumeist mehr als 80 %, vorzugsweise mehr als 85 %, aus stark verunreinigten Rohgemischen erhältlich ist, zumal eine Reihe von anderen, gebräuchlichen Extraktionsmitteln nur unbefriedigende Ergebnisse liefern. Die gilt beispielsweise für Alkohole, wie Butanol, Ester, wie Butylacetat, Ether wie Diethylether, Diisobutylether und Dibutylether oder Carbonsäuren, wie Hexansäure.

Die Erfindung wird durch die folgenden Beispiele erläutert.

Beispiel 1

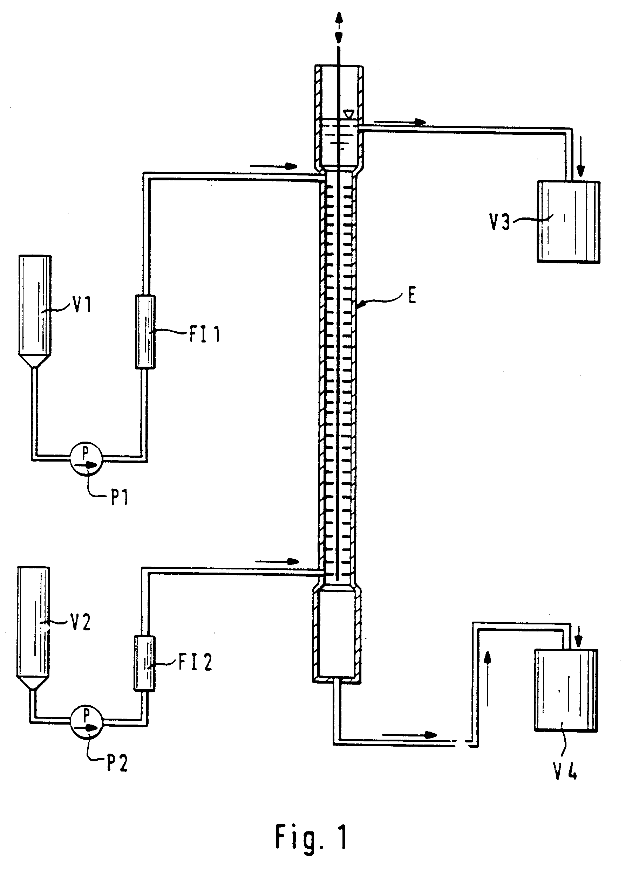

In eine Extraktionskolonne E gemäß anliegender Figur 1 (Innendurchmesser 25 mm, L = 2 m, 35 Siebböden, Hub/Schub, Frequenz 60/Minute) wurde Ethylhexanol aus dem Gefäß V2 über die Pumpe P2 und den Strömungsmesser FI2 unten in den Extraktor E eingepumpt. Nachdem der Extraktor bis zum Überlauf nach Gefäß V3 gefüllt war, wurde mit dem Zupumpen von rohor wäßriger Vinylphosphonsäurelösung aus dem Vorratsgefäß V1 über die Pumpe P1 und den Strömungsmesser FI1 in den oberen Teil des Extraktors E begonnen. Nach Anfall einer schweren wäßrigen Phase im unteren Abscheidegefäß des Extraktors E wurde unter Konstanthaltung der Phasengrenze der Wasserphase mit dem Abziehen der

3

Wasserphase nach Gefäß V4 begonnen. Nach mehrstündigem Konstantfahren zur Einstellung des Gleichgewichtes wurde mit der Bilanzierung begonnen. Die folgenden Zahlen stellten sich ein:

| | |
|---|---|
| Zulauf 2-Ethylhexanol aus Gefäß V2 | 1,9 kg/h |
| Zulauf Rohvinylphosphonsäure aus Gefäß V1 | 0,5 kg/h |

Zusammensetzung der Rohvinylphosphonsäure Gew.-%, die durch Hydrolyse eines thermisch nachbehandelten Sumpfes der Vakuumspaltung von Acetoxyethanphosphonsäuredimethylester erhalten wurde:

| | |
|---|---|
| Wasser | 40,3 |
| Vinylphosphonsäure | 40,7 |
| Phosphorsäure | 4,2 |
| Methoxyethanphosphonsäure | 6,1 |
| Vinylphosphonsäureester der Hydroxyethanphosphonsäure | 2,3 |
| Sonstige Phosphonsäuren | 6,4 |

Hinter dem Extraktor fielen 2.194 g/h organische Phase in dem Gefäß V3 an, während die Menge an Wasserphase in dem Gefaß V2 206 g/h betrug.

Beim Eindampfen von 2.194 g der organischen Phase im Vakuum erhielt man 188 g Rückstand. Der Rückstand enthielt 91,4 Gew.-% Vinylphosphonsäure. Wenn aus der wäßrigen Einsatzlösung der Wasseranteil herausgerechnet wurde, so ergab sich, daß man aus einer 68,2 %igen Vinylphosphonsäure im Einsatz eine 91,4 %ige Vinylphosphonsäure als Destillationsrückstand mit einer Ausbeute, bezogen auf den Einsatz, von 84,5 % erhält.

Beispiel 2

Die Apparatur und die Versuchsdurchfuhrung entsprachen denen von Beispiel 1. Die Nachbehandlung der organischen Phase wurde jedoch in der Weise geändert, daß 2.194 g der organischen Phase mit 600 g Wasser ausgerührt wurden. Nach Phasentrennung wurde die wäßrige Phase im Vakuum eingedampft. Als Rückstand verblieben 112 g einer 90,5 %igen Vinylphosphonsäure.

Beispiel 3

Die Apparatur und die Versuchsdurchführung entsprachen denen von Beispiel 1, jedoch wurden 2.194 g der organischen Phase mit 20 g Wasser ausgeschüttelt. Nach Phasentrennung und Abzug der Wasserphase wurde die organische Phase nochmals mit 600 g Wasser ausgerührt. Nach erneuter Phasentrennung wurde die wäßrige Phase eingedampft. Als Rückstand verblieben 105 g 97%iger Vinylphosphonsäure.

Beispiel 4

Verfahren wurde wie in Beispiel 3 beschrieben. Nach der Behandlung der organischen Phase mit 20 g Wasser und Phasentrennung wurde jedoch die organische Phase im Vakuum eingedampft. Als Rückstand verblieben 171 g einer 98%igen Vinylphosphonsäure.

Beispiel 5

Durch thermische Spaltung von Acetoxyethanphosphonsäuredimethylester unter Normaldruck analog der DE-Offenlegungsschrift 3 001 894 und anschließende Hydrolyse dar vinylphosphonsäuremonomethylestergemische wurde eine Rohvinylphosphonsäure der folgenden Zusammensetzung hergestellt:

| | | |
|---|---|---|
| Vinylphosphonsäure | 73 | Gew.-% |
| Polyvinylphosphonsäure | 1 | " |
| Methoxyethanphosphonsäure | 1 | " |
| Hydroxyethanphosphonsäure | 3 | " |
| Vinylphosphonsäureester der Hydroxyethanphosphonsäure | 6 | " |
| Phosphorsäure | 11 | " |
| Sonstige Phosphonsäuren | 5 | " |

Diese Rohvinylphosphonsäure wurde im Gewichtsverhältnis 1:1 mit Wasser gemischt.

In der Anordnung analog Beispiel 1 wurden 1,5 kg der wäßrigen Vinylphosphonsäure in den Extraktor E eingebracht.

Als Extraktionsmittel wurde Cyclohexanol verwendet; der Eintrag pro Stunde betrug 2,0 kg.

Nach Eindampfen der organischen Phase hinter dem Extraktor im Vakuum verblieben als Rückstand 486 g/h an 90%iger Vinylphosphonsäure.

Beispiel 6

Die Versuchsanordnung und Mengen waren wie in Beispiel 1 beschrieben. Anstelle von 2-Ethylhexanol wurde jedoch Methylisobutylketon als Extraktionsmittel verwendet. Nach Abdestillieren des Methylisobutylketons wurden 120 g/h Rückstand erhalten, der zu 90 Gew.-% Vinylphosphonsäure enthielt.

Vergleichsbeispiel A

Die Versuchsanordnung und Mengen waren wie in Beispiel 1 beschrieben. Anstelle von 2-Ethylhexanol wurde jedoch Di-n-butylether als Extraktionsmittel verwendet. Nach dem Eindampfen der organischen Phase hinter dem Extraktor verblieben 6 g Rückstand, die 43 % Vinylphosphonsäure enthielten.

Vergleichsbeispiel B

Es wurde wie in Vergleichsversuch A verfahren, jedoch wurde anstelle von Di-n-butylether Butanol als Extraktionsmittel eingesetzt. Nach Eindampfen der organischen Phase hinter dem Extraktor verblieben 130 g Rückstand, der 69 Gew.-% Vinylphosphonsäure enthielt.

Vergleichsbeispiel C

Der Di-n-butylether des Vergleichsbeispieles A wurde durch Butylacetat ersetzt. Nach Eindampfen der organischen Phase hinter dem Extraktor fielen 20 g Rückstand an, der 71 Gew.-% Vinylphosphonsäure enthielt.

Vergleichsbeispiel D

Der Di-n-butylether des Vergleichsbeispieles A wurde durch Capronsäure ersetzt. Nach Eindampfen der organischen Phase hinter dem Ertraktor fielen 60 g organische Phase an, die 75 % Vinylphosphonsäure enthielten.

**Patentansprüche**

1. Verfahren zur Abtrennung von Vinylphosphonsäure aus Rohgemischen, dadurch gekennzeichnet, daß die Abtrennung durch Extraktion mit Alkoholen und/oder Ketonen, die jeweils mindestens 5 Kohlenstoffatome enthalten, erfolgt.

**2.** Verfahren nach Anspruch 1, dadurch gekennzeichnet, daß das Extraktionsmittel 5 bis 15 kohlenstoffatome aufweist.

**3.** Verfahren nach Anspruch 1 oder 2, dadurch gekennzeichnet, daß als Extraktionsmittel gesättigte aliphatische oder cycloaliphatische Alkohole, Ketone oder Gemische davon eingesetzt werden.

**4.** Verfahren nach mindestens einem der Ansprüche 1 bis 3, dadurch gekennzeichnet, daß als Extraktionsmittel 2-Ethylhexanol, Cyclohexanol, Methylisobutylketon oder Heptanole dienen.

**5.** Verfahren nach mindestens einem der Ansprüche 1 bis 4, dadurch gekennzeichnet, daß das Rohgemisch Wasser und mindestens 20 Gew.-%, vorzugsweise mindestens 30 Gew.-%, bezogen auf das gesamte Rohgemisch, an Vinylphosphonsäure enthält.

**6.** Verfahren nach mindestens einem der Ansprüche 1 bis 5, dadurch gekennzeichnet, daß die Extraktion in einer Kolonne im Gegenstrom erfolgt.

**7.** Verfahren nach mindestens einem der Ansprüche 1 bis 6, dadurch gekennzeichnet, daß die Extraktion bei Temperaturen von 20 bis 90 °C durchgeführt wird.

**8.** Verfahren nach Anspruch 6 oder 7, dadurch gekennzeichnet, daß das Verhältnis von Zulaufmenge des Rohgemisches zur Zulaufmenge des Extraktionsmittels zu der Kolonne 1:1 bis 1:20, vorzugsweise 1:2 bis 1:10, beträgt.

**9.** Verfahren nach mindestens einem der Ansprüche 1 bis 8, dadurch gekennzeichnet, daß die erhaltene Vinylphosphonsäurelösung durch Eindampfen zu Vinylphosphonsäure aufgearbeitet wird.

**10.** Verfahren nach Anspruch 9, dadurch gekennzeichnet, daß das erhaltene Vinylphosphonsäurelösung ohne Isolierung der reinen Säure für weitere Umsetzungen eingesetzt wird.

## Claims

**1.** A method for separating vinylphosphonic acid from crude mixtures, wherein the separation is effected by extraction with alcohols and/or ketones, which in each case comprise at least 5 carbon atoms.

**2.** The method as claimed in claim 1, wherein the extraction agent has 5 to 15 carbon atoms.

**3.** The method as claimed in claim 1 or 2, wherein the extraction agents used are saturated aliphatic or cycloaliphatic alcohols, ketones or mixtures thereof.

**4.** The method as claimed in at least one of claims 1 to 3, wherein the extraction agents used are 2-ethylhexanol, cyclohexanol, methyl isobutyl ketone or heptanols.

**5.** The method as claimed in at least one of claims 1 to 4, wherein the crude mixture comprises water and at least 20% by weight, preferably at least 30% by weight, with respect to the total crude mixture, of vinylphosphonic acid.

**6.** The method as claimed in at least one of claims 1 to 5, wherein the extraction is carried out in a column in counter-current.

**7.** The method as claimed in at least one of claims 1 to 6, wherein the extraction is carried out at temperatures of 20 to 90 °C.

**8.** The method as claimed in claim 6 or 7, wherein the ratio of feed amount of the crude mixture to the feed amount of the extraction agent to the column is 1:1 to 1:20, preferably 1:2 to 1:10.

**9.** The method as claimed in at least one of claims 1 to 8, wherein the resulting vinylphosphonic acid solution is worked up by evaporation to give vinylphosphonic acid.

**10.** The method as claimed in claim 9, wherein the resulting vinylphosphonic acid solution is used for further reactions without isolation of the pure acid.

**Revendications**

**1.** Procédé de séparation de l'acide vinylphosphonique de mélanges bruts, caractérisé en ce que la séparation est effectuée par extraction avec des alcools et/ou des cétones contenant chacun au moins 5 atomes de carbone.

**2.** Procédé selon la revendication 1, caractérisé en ce que l'agent d'extraction contient 5 à 15 atomes de carbone.

**3.** Procédé selon les revendications 1 ou 2, caractérisé en ce que l'on utilise comme agents d'extraction des alcools, cétones aliphatiques ou cycloaliphatiques saturées, ou des mélanges de ceux-ci.

**4.** Procédé selon au moins une des revendications 1 à 3, caractérisé en ce que l'on utilise comme agents d'extraction du 2-éthylhexanol, du cyclohexanol, de la méthylisobutylcétone ou des heptanols.

**5.** Procédé selon au moins une des revendications 1 à 4, caractérisé en ce que le mélange brut contient de l'eau et au moins 20 % en poids, de préférence au moins 30 % en poids, par rapport au mélange brut total, d'acide vinylphosphonique.

**6.** Procédé selon au moins une des revendications 1 à 5, caractérisé en ce que l'extraction s'effectue dans une colonne, à contre-courant.

**7.** Procédé selon au moins une des revendications 1 à 6, caractérisé en ce que l'extraction est effectuée à des températures de 20 à 90 °C.

**8.** Procédé selon les revendications 6 ou 7, caractérisé en ce que le rapport de la quantité du mélange brut introduite à la quantité de l'agent d'extraction introduite dans la colonne est de 1:1 à 1:20, de préférence de 1:2 à 1:10.

**9.** Procédé selon au moins une des revendications 1 à 8, caractérisé en ce que la solution d'acide vinylphosphonique obtenue est soumise à un traitement ultérieur par évaporation pour donner l'acide vinylphosphonique.

**10.** Procédé selon la revendication 9, caractérisé en ce que la solution d'acide vinylphosphonique obtenue est utilisée sans isolement de l'acide pur pour des réactions ultérieures.

Fig. 1